# EUROPÄISCHE PATENTSCHRIFT

(11) **EP 0 453 912 B1**
(45) Veröffentlichungstag und Bekanntmachung des Hinweises auf die Patenterteilung: **08.02.1995**
(21) Anmeldenummer: 91105903.8
(22) Anmeldetag: 13.04.1991
(51) Int. Cl.: C08L 83/04, C08K 7/28, C08K 13/04

(54) **Flammfeste Polyorganosiloxanmasse**
Flame-resistant polysiloxane compositions
Composition d'organopolysiloxanes résistants aux flammes

(30) Priorität: 25.04.1990 DE 4013161
(43) Veröffentlichungstag der Anmeldung: 30.10.1991
(73) Patentinhaber: Schott Glaswerke, 55122 Mainz (DE); DOW CORNING GmbH, D-65201 Wiesbaden (DE)
(72) Erfinder: Leroux, Roland, Dr., W-6501 Stadecken-Elsheim (DE); Thürk, Jürgen, Dr., W-6509 Schornsheim (DE); Jonas, Reinhard, Dr., W-6270 Idstein (DE)

(56) Entgegenhaltungen:
- EP-A- 0 212 827
- EP-A- 0 243 576
- US-A- 4 286 013
- US-A- 4 299 872
- US-A- 4 433 069

## Beschreibung

Härtbare Polyorganosiloxanmassen finden in größtem Umfang Verwendung als hochwertige und hochbeanspruchbare Dicht- und Klebstoffe. Sie härten dauerelastisch aus und werden zum Abdichten von Fugen, z. B. im Sanitärbereich und im Bauwesen, sowie bei der Herstellung von Verglasungen, z. B. als Falzdichtung beim Einkitten von Fensterscheiben in Rahmen oder zum Verbinden von Glasscheiben untereinander eingesetzt.

Vielfach ist es erforderlich, diese Massen flammfest auszurüsten. Von den zahlreichen, mit mehr oder weniger guten Brandschutzeigenschaften ausgestatteten Massen oder Systemen seien genannt: EP 0 243 576 A2 beschreibt eine Polysiloxan-Formmasse mit einem Gehalt an blähfähigen Graphitverbindungen und an stickstoffhaltigen Phosphor- bzw. Phosphonsäuren für Fugenabdichtungen. EP 0 212 827 A2 beschreibt eine wasserhaltige Spachtelmasse auf Siliconbasis mit expandiertem Vermiculit und einem Faseranteil zur Verhütung von Schwindungsrissen beim Trocknen, die zum Ausfüllen von Rissen oder Wanddurchbrüchen in Brandmauern geeignet ist. US-PS 4 286 013 beschreibt ein Laminat zur Abschottung brandgefährdeter Bereiche vom Passsagierraum in Massenverkehrsmitteln wie Flugzeugen. Das Laminat besteht aus einer Glasfasermatte, die mit einer Masse aus Silicongummi, Verstärkungsfasern und Glashohlkugeln zur Gewichtserleichterung beschichtet ist. Das Laminat muß vor seiner Verwendung bei einer Temperatur von 350 °C ausgeheizt werden. Schließlich beschreibt US-PS 4 433 069 eine Silicon-Schaummasse enthaltend feuerfeste nichtmetallische Fasern, feuerfeste zelluläre Körper wie Perlite oder Glashohlkugen und Platin (-salze).

Die flammfeste Ausrüstung von Siliconharzmassen erfolgte bisher am wirkungsvollsten durch Zumischung von halogenierten Diphenylverbindungen, z. B. Octabromdiphenylether oder Nonabrombiphenyl (z. B. DE-PS 29 09 462 oder DE-OS 30 41 031). Diese halogenierten Diphenylverbindungen können im Brandfalle die als toxisch bekannten polyhalogenierten Dibenzofurane bzw. Dibenzodioxine bilden. Obwohl die so hergestellten flammfesten Polyorganosiloxanmassen im allgemeinen ausreichende Flammfesteigenschaften besitzen, sollte ihre Verwendung aus den oben genannten Gründen eingeschränkt werden.

Die Aufgabe der Erfindung besteht darin, eine flammfeste härtbare Polyorganosiloxanmasse vergleichbarer Wirkung zu finden, die frei ist von halogenierten Diphenylverbindungen.

diese Aufgabe wird durch die in Patentanspruch 1 beschriebene Erfindung gelöst.

Überraschenderweise zeigt die wohlausgewogene Kombination aus Glashohlkugeln und Intumeszenzmasse eine ähnlich gute flammfest machende Wirkung wie die bisher für diesen Zweck benutzten halogenierten Diphenylverbindungen.

Die Glashohlkugeln sollen einen Außendurchmesser von bis zu etwa 200 »m besitzen und in einer Menge von 2 bis 40 Gew.-% in der Polyorganosiloxanmasse vorhanden sein. Glashohlkugeln mit einem Außendurchmesser von unter 5 »m sind nur noch sehr schwer und deswegen teuer herstellbar, so daß aus praktischen Gründen kleinere Kugeln nicht mehr verwendet werden sollten. Überschreitet man den Durchmesser von 200 »m, so wird ein immer größerer Anteil der Kugeln beim Einmischen in die Polyorganosiloxanmasse durch Bruch zerstört. Kugeln mit einem Durchmesser von oberhalb 60 »m bewirken eine zunehmende Rauhigkeit der Oberfläche der fertigen Masse. Da das im allgemeinen unerwünscht ist, werden Kugeln mit einem Durchmesser von unterhalb 60 »m, insbesondere unterhalb 50 »m bevorzugt. Die Menge an Glashohlkugeln soll 40 Gew.-% in der Masse nicht überschreiten, da die Masse dann so steif wird, daß sie nur noch schwer handhabbar ist. Bei einem Anteil von unter 2 Gew.-% wird die Wirkung zu gering. Besonders bevorzugt ist ein Gehalt von etwa 6 bis 25, insbesondere 10 bis 20 Gew.-%. Die Zumischung der Glashohlkugeln bewirkt neben der Flammschutzwirkung auch eine oft gewünschte Verringerung der Dichte und der Wärmeleitfähigkeit der Masse.

Um die Flammschutzwirkung möglichst groß zu halten, ist es weiterhin vorteilhaft, wenn die Kugeln mit einem Gas gefüllt sind, das zu einer etwaigen Entflammung nichts beiträgt, d.h. einem nicht brennbaren Gas, wobei unter brennbarem Gas auch Sauerstoff bzw. Luft verstanden wird. Als Füllung für die Kugeln bieten sich insbesondere Stickstoff und Kohlendioxid an, aber auch andere Gase wie insbesondere Schwefelhexafluorid sind denkbar, wobei allerdings Kugeln mit letzterer Gasfüllung derzeit im Handel nicht erhältlich sind. Die Verwendung einer bestimmten Glasart für die Kugeln ist nicht kritisch. Es können sowohl Borosilicatglas als auch die einfachen Kalk-Natrongläser Verwendung finden. Die üblicherweise im Handel erhältlichen Kugeln bestehen aus Kalk-Natron-Glas.

Die zweite für Flammfesteigenschaften wesentliche Komponente ist die Intumeszenzmasse. Die Intumeszenzmasse soll anorganischer Natur sein, um die Bildung leichtentzündlicher Spaltprodukte zu vermeiden. Es ist ferner wichtig, daß das Aufschäumen der Intumeszenzmasse beginnt, bevor die Selbstentzündungstemperatur der Polyorganosiloxane bzw. der in der Polyorganosiloxanmasse ggfls. enthaltenen Weichmacher usw. oder der aus ihnen entstehenden Pyrolyseprodukte erreicht wird. Andererseits soll die Intumeszenzmasse natürlich noch bei den höchsten vorkommenden Gebrauchs- und Verarbeitungstemperaturen stabil sein. Es hat sich daher als ganz allgemein günstig erwiesen, wenn die Intumeszenzmassen bei Temperaturen zwischen etwa 80 und 240°C aufzuschäumen beginnen. Es ist dabei für einen Fachmann ohne Schwierigkeiten möglich, innerhalb dieses Temperaturintervalls die Intumeszenzmasse oder eine Mischung aus verschiedenen Intumeszenzmaterialien auszuwählen, die für den geplanten Verwendungszweck die günstigste Reaktionstemperatur oder das günstigste Reaktionstemperaturintervall besitzen. Es können natürlich zusätzlich auch noch weitere Intumeszenzmaterialien mit höherer Starttemperatur zugesetzt werden, die dann zu einem späteren Zeitpunkt eine zusätzliche Intumeszenz hervorrufen oder solche, die bei Temperaturbelastung nicht brennbare oder flammhemmende Gase abgeben.

Die Intumeszenzmasse soll in einer Menge von 3 bis 50 Gew.-% zur Anwendung kommen. Unterhalb von 3 Gew.-% ist keine ausreichende Wirkung mehr erzielbar, oberhalb von 50 Gew.-% wird die Polysiloxanmasse im Brandfalle so stark ausgedehnt, daß die entstehende Masse keinen ausreichenden Zusammenhalt mehr besitzt. Gute Ergebnisse erzielt man mit einem Gehalt von 5 bis 25 Gew.-% an Intumeszenzmasse. Den optimalen Gehalt kann man durch Vorversuche einfach feststellen, wobei zu berücksichtigen ist, daß die Verwendung von Intumeszenzmassen mit großer Intumeszenz einen geringeren Prozentgehalt ermöglicht und daß Intumeszenzmassen mit kleinerer Intumeszenz in größerer Menge zugesetzt werden müssen.

Intumeszenzmassen sind zahlreich im Handel erhältlich und dem Fachmann gut bekannt. Als Intumeszenzmassen werden Massen verwendet, die im Brandfalle entweder sich selbst stark ausdehnen oder die z.B. Kristall- oder Bindungswasser in Dampfform oder Kohlendioxid abspalten und dadurch eine sehr starke Volumenvergrößerung der gesamten Polyorganosiloxanmasse hervorrufen. Zur Anwendung in dem genannten Temperaturbereich geeignet sind. Vermiculite, Perlite, Glimmer, Blähgraphit, Wermlandit, Thanmasit, und Hydrotalkit. Ganz besonders günstige Ergebnisse erzielt man mit Blähgraphit, vorzugsweise in Mengen von 5 bis 25 Gew.-%, insbesondere von 8 bis 15 Gew.-%.

Die Formulierungen von Polyorganosiloxangrundmassen, die durch den erfindungsgemäßen Gehalt an Glashohlkugeln und anorganischer Intumeszenzmasse flammfest gemacht werden können, sind dem Fachmann wohlbekannt und werden in zahllosen Veröffentlichungen beschrieben. Die Grundmassen bestehen aus einem Basispolymer, ggfls. einem Weichmacher, Füll- und Verstärkungsstoffen sowie einem Vernetzer bzw. Vernetzungskatalysator. Als Basispolymere werden hauptsächlich Polydimethyl- und Polydimethylphenylsiloxane, die hydroxyl- oder vinyl- oder hexenylhaltige Vernetzungsgruppen enthalten, vorzugsweise solche, die mit diesen Gruppen endblockiert sind, verwendet. Als Weichmacher finden Silikonöle, d.h. im allgemeinen methylendblockierte Dimethylpolysiloxane oder Dimethylphenylsiloxane Verwendung, deren Gehalt wegen ihrer leichteren Entflammbarkeit vorzugsweise möglichst gering gehalten wird. Zur Verbesserung der mechanischen Eigenschaften des Endprodukts wird den Massen Ruß oder Kieselsäure, insbesondere pryrogene Kieselsäure zugesetzt. Inerte Füllstoffe sind z.B. Kieselgur. Varnetzungskatalysatoren sind z.B. Peroxide für Massen, die sich erst bei erhöhter Temperatur härten lassen sollen. Für kalthärtende 2-Komponentenmassen wird die Grundmasse mit Hilfe von z.B. Tetraethylsilicat als Vernetzungsmittel und z.B. Dibutylzinndilaurat als Katalysator vernetzt. Bei kalthärtendan Einkomponentenmassen, z.B. dem sog. Acetatsystem, erfolgt die Vernetzung durch einen mittels Luftfeuchtigkeit aktivierbaren Vernetzer. Bei diesen Massen muß darauf geachtet werden, daß nicht die Intumeszenzmasse unbeabsichtigt die Härtung einleitet. Einzelheiten zu Grundmassen und Katalysatorsystemen können den gängigen Handbüchern entnommen werden, z.B. Noll, "Chemie und Technologie der Silicone", Verlag Chemie, Weinheim/Bergstr. 1960 oder "Silicone, Chemie und Technologie", Vulkan Verlag, Essen 1989. Unabhängig von dem gewählten Vernetzungssystem sind sich die Eigenschaften der gehärteten, vernetzten Siliconkautschuke, des Silicongummis, ähnlich, so daß der erfindungsgemäße Zusatz von Glashohlkugeln und Intumeszenzmassen in allen Fällen wirkt. Die Polymergrundmassen sowie Vernetzer, Katalysatoren usw. werden sowohl einzeln als auch in weitgehend vorgefertigten Mischungen von zahlreichen namhaften Chemieunternehmen angeboten.

In jedem Fall kann der grundsätzliche Aufbau der erfindungsgemäßen flammfesten härtbaren Polyorganosiloxanmesse bzw. der zu entsprechenden Silicongummi-Produkten zu verarbeitenden Masse wie folgt sein:
a) 10 bis 85 Gew.-% unkatalysiertes handelsübliches Siloxan (Basispolymer)
b) 0 bis 30 Gew.-% Polyorganosiloxan als Weichmacher (Siliconöl, z.B. methylendgestopptes Polydimethylsiloxan)
c) 0 bis 50 Gew.-% hochdisperser aktiver Füllstoff als Verstärkungskomponente (pyrogene Kieselsäure)
d) 0 bis 10 Gew.-% Pigmente, rein oder in Pastenform
e) 0,5 bis 15 Gew.-% Vernetzer/Katalysator, abgestimmt auf das jeweilige Vernetzungssystem
f) 0 bis 50 Gew.-% inaktiver Füllstoff
g) 2 bis 40 Gew.-% Glashohlkugeln
h) 3 bis 50 Gew.-% Intumeszenzmasse.

Die erfindungsgemäßen Polyorganosiloxanmassen besitzen ausgezeichnete Flammfesteigenschaften, ohne daß im Brandfalle die Entstehung toxischer Pyrolyseprodukte befürchtet werden muß.

### Beispiel

Es wurde eine flammfeste härtbare Polyorganosiloxanmasse folgender Zusammensetzung hergestellt:
66 Gew.-% OH-endgestopptes Polydimethylphenylsiloxan
4,5 Gew.-% luftfeuchtigkeitsreagierende Vernetzer vom Acetattyp (incl. 0,02 Gew.-% Sn-Katalysator)
4,5 Gew.-% Pyrogene Kieselsäure als Verstärker
15 Gew.-% Luftgefüllte Glashohlkugeln mit ca. 40 »m Durchmesser
10 Gew.-% Blähgraphit (Hersteller: SIGRI, Typ FR 90-60/80).

Es wurde eine Brandschutzisolierglasscheibe, bestehend aus einer vorgespannten Borosilicatglasscheibe einer Stärke von 6 mm und einer Floatglasscheibe einer Stärke von 4 mm hergestellt, indem die Scheiben mittels eines Stahlabstandshalters in einem Abstand von 12 mm zueinander gehalten und im Randspalt mittels der oben genannten Masse verklebt wurden. Nach dem Aushärten der Masse wurde die Scheibe in einen Stahlrahmen eingebaut und die Falze oberhalb der Dichtungsbänder ebenfalls mittels der oben beschriebenen Masse abgedichtet. Nach dem Aushärten der Messe wurde die Verglasung einem Brandversuch gemäß DIN 4102 Teil 13 unterzogen, wobei die Borosilicatglasscheibe flammseitig angeordnet war. Es zeigte sich, daß die Masse bis zur Beendigung des Versuchs nach 60 min ihre Dichtfunktion aufrecht erhielt und daß vor allem auf der dem Feuer abgewandten Seite keine Flammen aus der Dichtung bzw. ihren Pyrolyseprodukten auftraten. Eine derartig gute Flammschutzwirkung konnte bisher nur mit der in DE-PS 29 09 462 beschriebenen Flammschutzkombination aus Kreide und einer hochbromierten Diphenylverbindung erreicht werden.

## Patentansprüche

1. Flammfeste härtbare Polyorganosiloxanmasse,
**gekennzeichnet durch**
einen Gehalt von
2 - 40 Gew.-% Glashohlkugeln mit einem Außendurchmesser von bis zu 200 »m und
3 - 50 Gew.-% einer bei einer Temperatur von 80 bis 240° aufblähenden anorganischen Intumeszenzmasse aus der Gruppe Vermiculite, Perlite, Glimmer, Blähgraphit, Wermlandit, Thanmasit und Hydrotalkit.

2. Massen nach Anspruch 1,
gekennzeichnet durch einen Gehalt von
10 - 20 Gew.-% Glashohlkugeln.

3. Masse nach Anspruch 1 oder 2,
dadurch gekennzeichnet,
daß die Glashohlkugeln mit einem nichtbrennbaren Gas gefüllt sind.

4. Masse nach wenigstens einem der Ansprüche 1 bis 3,
gekennzeichnet durch einen Gehalt von
5 - 25 Gew.-% Intumeszenzmasse.

5. Masse nach wenigstens einem der Ansprüche 1 bis 4,
gekennzeichnet durch die Verwendung von Blähgraphit als Intumeszenzmasse.

6. Masse nach Anspruch 5,
gekennzeichnet durch einen Gehalt von 8 - 15 Gew.-% Blähgraphit.

7. Verwendung einer Polyorganosiloxanmasse nach wenigstens einem der Ansprüche 1 bis 5 als flammfeste Kleb- und Dichtmasse.

8. Verwendung einer Polyorganosiloxanmasse nach Anspruch 6 als Kleb- und Dichtmasse bei feuerhemmenden Verglasungen.

## Claims

1. Flameproof curable polyorganosiloxane material, characterised in that it contains
2 - 40 wt-% hollow glass spheres having an external diameter of up to 200 »m and
3 - 50 wt-% of an inorganic intumescent material which expands at a temperature of from 80 to 240° and is taken from the group comprising vermiculites, perlites, micas, expanded graphite, wermlandite, thaumasite and hydrotalcite.

2. Materials according to Claim 1, characterised in that they contain 10 - 20 wt-% hollow glass spheres.

3. Material according to Claim 1 or 2, characterised in that the hollow glass spheres are filled with a non-combustible gas.

4. Material according to at least one of Claims 1 to 3, characterised in that it contains 5 - 25 wt-% intumescent material.

5. Material according to at least one of Claims 1 to 4, characterised in that expanded graphite is used as an intumescent material.

6. Material according to Claim 5, characterised in that it contains 8 - 15 wt-% expanded graphite.

7. Use of a polyorganosiloxane material according to at least one of Claims 1 to 5 as a flameproof bonding and sealing material.

8. Use of a polyorganosiloxane material according to Claim 6 as a bonding and sealing material in fire-retardant glazings.

## Revendications

1. Composition de polyorganosiloxane durcissable ignifugée, caractérisée par une teneur comprise entre 2 et 40 % en poids de billes de verte creuses ayant un diamètre extérieur allant jusqu'à 200 »m et une teneur comprise entre 3 et 50 % en poids d'une matière intumescente minérale s'expansant à une température comprise entre 80 et 240 °C choisie parmi la vermiculite, la perlite, les micas, le graphite expansible, la wermlandite, la thaumasite et l'hydrotalcite.

2. Composition conforme à la revendication 1, caractérisé par une teneur en billes de verte creuses comprise entre 10 et 20 % en poids.

3. Composition conforme à la revendication 1 ou 2, caractérisée en ce que les billes de verte creuses sont remplies avec un gaz non inflammable.

4. Composition conforme à au moins une des revendications 1 à 3, caractérisée par une teneur en matière intumescente comprise entre 5 et 25 % en poids.

5. Composition conforme à au moins une des revendications 1 à 4, caractérisée par l'utilisation de graphite expansible comme matière intumescente.

6. Composition conforme à la revendication 5, caractérisée par une teneur en graphite expansible comprise entre 8 et 15 % en poids.

7. Utilisation d'une composition de polyorganosiloxane conforme à au moins une des revendications 1 à 5 comme matériau adhésif ou d'étanchéité.

8. Utilisation d'une composition de polyorganosiloxane conforme à la revendication 6 comme matériau adhésif ou d'étanchéité pour des villages pare-feu.
